(19)

Europäisches
Patentamt
European
Patent Office
Office européen
des brevets

(11) **EP 3 086 285 A1**

(12) **EUROPEAN PATENT APPLICATION**

(43) Date of publication:
26.10.2016  Bulletin 2016/43

(51) Int Cl.:
*G06T 7/00* $^{(2006.01)}$

(21) Application number: 15305609.8

(22) Date of filing: 22.04.2015

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA**

(71) Applicant: **Thomson Licensing
92130 Issy-les-Moulineaux (FR)**

(72) Inventors:
• **Sorgi, Lorenzo**
30655 Hannover (DE)
• **Bushnevskiy, Andrey**
30449 Hannover (DE)
• **Rosenhahn, Bodo**
30952 Ronnenberg (DE)

(74) Representative: **Huchet, Anne et al
TECHNICOLOR
1-5, rue Jeanne d'Arc
92130 Issy-les-Moulineaux (FR)**

(54) **METHOD OF CAMERA CALIBRATION FOR A MULTI-CAMERA SYSTEM AND APPARATUS PERFORMING THE SAME**

(57)     A method of camera calibration for a multi-camera system and an apparatus (20) performing the method are described. The camera calibration method comprises: receiving (10) images of a 3D scene captured by a multi-camera system; extracting (11) epipoles from the received images; and determining (12) a geometry of the multi-camera system using the epipoles. The determination (12) of the geometry of the multi-camera system preferably comprises estimating (13) a rotational component and a translational component of a pose of each camera of the multi-camera system.

```
┌─────────────────────┐
│  Receiving images   │── 10
│   of a 3D scene     │
└─────────────────────┘
           │
           ▼
┌─────────────────────┐
│ Extracting epipoles │── 11
└─────────────────────┘
           │
┌─────────────────────┐
│ Extending the set of│── 14
│  epipoles using a   │
│       mirror        │
└─────────────────────┘
           │
           ▼
┌─────────────────────┐
│    Determining      │── 12
│  geometry using the │
│      epipoles       │
└─────────────────────┘
           │
┌─────────────────────┐
│ Estimating rotational│── 13
│  and translational   │
│    components        │
└─────────────────────┘
```

**Fig. 1**

## Description

### TECHNICAL FIELD

A method and an apparatus for camera calibration are proposed, particularly used for a multi-camera system. The technical field denoted as camera calibration collects algorithms and technologies aimed at the characterization of a mathematical model for the description of the image formation process of a camera or a multi-camera system. In addition, a computer readable medium suitable for such a method and an apparatus is also proposed.

### BACKGROUND

Camera calibration for a multi-camera system is normally divided into two phases, i.e. internal and external camera calibration. Internal camera calibration aims at the characterization of a mathematical model able to describe the projection geometry and the nonlinear distortion of each individual camera [I]. External camera calibration in alternative aims at the estimation of the global geometry of the cameras of the system, namely the set of Euclidean transformations between the reference system of the principal camera and all other cameras in the system. The two calibration tasks are logically distinct operations and can be performed independently or fused into a single calibration procedure according to different calibration methods [II, III].

In practical use, it is more convenient to keep the two tasks independent and separate as the internal calibration can remain unchanged while the cameras being added into or removed from the multi-camera system. In other words, only the external calibration needs to be updated when there is a change for the configuration of the multi-camera system.

One typical example is a multi-camera system equipped with a large number of cameras for high-accuracy 3D model capture, where the cameras can be optionally in a dome structure. Such a system is generally composed of industrial cameras with manual focuses, iris control and stable lighting conditions. Normally there is no need for a periodic adjustment of the optical configuration of the cameras, namely the internal camera calibration of the individual cameras can be assumed fixed. In contrast, it is common to change the camera configuration by removing cameras from or adding cameras to the system. The external camera calibration for the multi-camera system thus needs to be updated every time the camera configuration is changed.

### SUMMARY

Therefore, it is an object to propose an improved solution for external camera calibration for a multi-camera system, and thus accordingly estimates the global geometry of the system.

According to one embodiment, a camera calibration method for a multi-camera system is proposed. The method comprises: receiving images of a 3D scene captured by the multi-camera system; extracting epipoles from the received images; and determining a geometry of the multi-camera system using the epipoles.

In one embodiment, the determination of the geometry of the multi-camera system comprises estimating a rotational component and a translational component of a pose of each camera of the multi-camera system.

Preferably, the estimation of the rotational component of the camera pose includes solving the problem of

$$\left\{\hat{R}_{wi}\right\}_{i=2,\dots,N} = \operatorname*{argmin}_{R_{wi}\in SO(3)} \left\{ \sum_{(i,j)\in M} \left\| \rho_{i,j} \right\|^2 \right\}$$

within an iterative minimization context using Levenberg-Marquardt algorithm, where $R_{wi}$ is the rotational component of camera pose, $\hat{R}_{wi}$ represents the estimation of $R_{wi}$, $SO(3)$ is a group of 3D rotation matrices, $N$ is the number of the cameras in the multi-camera system, M denotes a set of pairs of available epipoles, and $\rho_{i,j}$ is an error contribution denoted as

$$\rho_{i,j} = \tilde{e}_{ij} + R_{wj}R_{wi}^{T}\tilde{e}_{ji},$$

where $\tilde{e}_{ij}$ represents the measurement of $e_{ij}$ which is an epipole as the projection of an $i$-th camera center in a $j$-th camera space.

Preferably, the estimation of the translational component of the camera pose includes solving the problem of

$$\left\{\hat{C}_i\right\}_{i=2,...,N} = \operatorname*{argmin}_{C_i \in \mathbb{R}^3}\left\{\sum_V \left\|\tau_{i,j}\right\|^2\right\}$$

within an iterative minimization context using Levenberg-Marquardt algorithm, where $\hat{C}_i$ represents the estimation of $C_i$ which is the coordinate of the center of an $i$-th camera, $N$ is the number of the cameras in the multi-camera system, V denotes a set of available epipoles, and $\tau_{i,j}$ is an error contribution denoted as

$$\tau_{i,j} = \tilde{e}_{ij} - \hat{R}_{wj} \cdot \mathcal{N}\left\{C_i - C_j\right\},$$

where $\tilde{e}_{ij}$ represents the measurement of $e_{ij}$ which is an epipole as the projection of an $i$-th camera center in a $j$-th camera space, $(C_i, C_j)$ are the coordinates of the camera centers, and $\mathcal{N}\{v\}$ is the normalization of a vector $v$ as an unit-norm vector and can be denoted as

$$\mathcal{N}\{v\} = \frac{v}{\sqrt{v^T v}}.$$

In one embodiment, the extraction of the epipoles from the received images includes manually selecting reference points in the images.

In one embodiment, the extraction of the epipoles from the received images includes extending the set of epipoles using a mirror.

According to one embodiment, a camera calibration apparatus is introduced, which comprises an image reception unit and a camera calibration unit. The image reception unit is configured to receive images of a 3D scene captured by a multi-camera system. The camera calibration unit is configured to extract epipoles from the received images and to determine a geometry of the multi-camera system using the epipoles.

In one embodiment, the camera calibration unit is also configured to estimate a rotational component and a translational component of a pose of each camera of the multi-camera system.

Also, a computer readable storage medium has stored therein instructions for camera calibration for a multi-camera system, which, when executed by a computer, cause the computer to: receive images of a 3D scene captured by the multi-camera system; extract epipoles from the received images; and determine a geometry of the multi-camera system using the epipoles.

The computer readable storage medium can be a non-transitory volatile or non-volatile storage medium, such as, for example, a hard disk, an optical or magnetic disk or tape, a solid state memory device, etc. The storage medium thus tangibly embodies a program of instructions executable by a computer or a processing device to perform program steps as described herein.

The proposed camera calibration method can be easily applied to different multi-camera systems with different camera configurations. The location and the orientation of the individual cameras are estimated using only the epipole visibility constraint across the images captured by the cameras, without use of any calibration object in any form of calibration pattern, laser pointers, etc. The proposed method and solution are robust and fast, and can be easily executed or performed by a non-expert user.

## BRIEF DESCRIPTION OF THE DRAWINGS

For a better understanding the proposed solutions shall now be explained in more detail in the following description with reference to the figures. It is understood that the solutions are not limited to the disclosed exemplary embodiments and that specified features can also expediently be combined and/or modified without departing from the scope of the proposed solutions as defined in the appended claims.

Fig. 1　　is a flow chart illustrating one preferred embodiment of a camera calibration method for a multi-camera system.

Fig. 2　　schematically illustrates exemplary models of epipolar geometry for a stereo rig camera set and a multi-camera system composed of three cameras.

Fig. 3    schematically illustrates the definition of a camera center as a point of a ray identified by the corresponding epipole in one embodiment of the camera calibration method.

Fig. 4    schematically illustrates the estimation of camera centers for a multi-camera system using Levenberg-Marquardt (LM) algorithm in one embodiment of the camera calibration method.

Fig. 5    shows results obtained from one exemplary embodiment of the camera calibration method for a multi-camera system.

Fig. 6    shows results obtained from another exemplary embodiment of the camera calibration method for a multi-camera system.

Figs. 7-8    illustrate the evaluation and the estimated errors for one embodiment of the proposed camera calibration method.

Fig. 9    schematically illustrates an exemplary model for one embodiment of the camera calibration method using a mirror to extend the set of epipoles.

Fig. 10    is a schematic diagram illustrating a preferred embodiment of an apparatus configured to perform the embodiments of the camera calibration method.

**DETAILED DESCRIPTION OF PREFERRED EMBODIMENTS**

In the following one preferred embodiment of a camera calibration method will be described and explained in detail. It should be noted that, when repeated and detailed descriptions of well-known functions or configurations may unnecessarily make obscure the gist of the present approach, the detailed description will be omitted.
In general, camera calibration of a multi-camera system tackles the estimation and determination of a 3D geometry of the multi-camera system, which is as known to estimate the set of Euclidean transformations between the reference frame of each camera of the multi-camera system and an absolute reference frame (or world reference frame, i.e. wrf). For example, for a multi-camera system composed of $N$ cameras, given the absolute reference frame denoted as w, the Euclidean transformation converting the vector representation of a 3D point from w to the reference frame of an $i$-th camera is

$$T_{wi} = \{R_{wi}, t_{wi} : R_{wi} \in SO(3), t_{wi} \in \mathbb{R}^3\},$$

where $SO(3)$ is the group of 3D rotation matrices.
In other words, a 3D point $X$ expressed in the wrf can be converted into an $i$-th camera reference frame using the transformation

$$X_i = R_{wi}X + t_{wi},$$

where $R_{wi}$ and $t_{wi}$ are respectively the rotational and translation components of the pose of each camera. Accordingly, the action of the transformation $T_{wi}$ on a vector $X$ can be synthetically expressed as

$$T_{wi} \circ X = R_{wi}X + t_{wi}.$$

Without loss of generality, it can be assumed that one camera, for example a first one, of the multi-camera system is coincident with the absolute reference wrf,

$$T_{w1} = (I_{3\times3}, [0 \quad 0 \quad 0]^T)$$

where $I_{3\times3} \in SO(3)$ is the null rotation, namely the identify matrix.
Therefore, the camera calibration for a multi-camera system compose of $N$ cameras can be represented and performed as the estimation of the transformation set $\{T_{wi}\}_{i=2,\ldots,N}$.

For the proposed method, it is preferably assumed that each camera of the multi-camera system is internally calibrated. This allows the transformation of the image points expressed in the pixel coordinates into the corresponding 3D rays in the 3D Euclidean space.

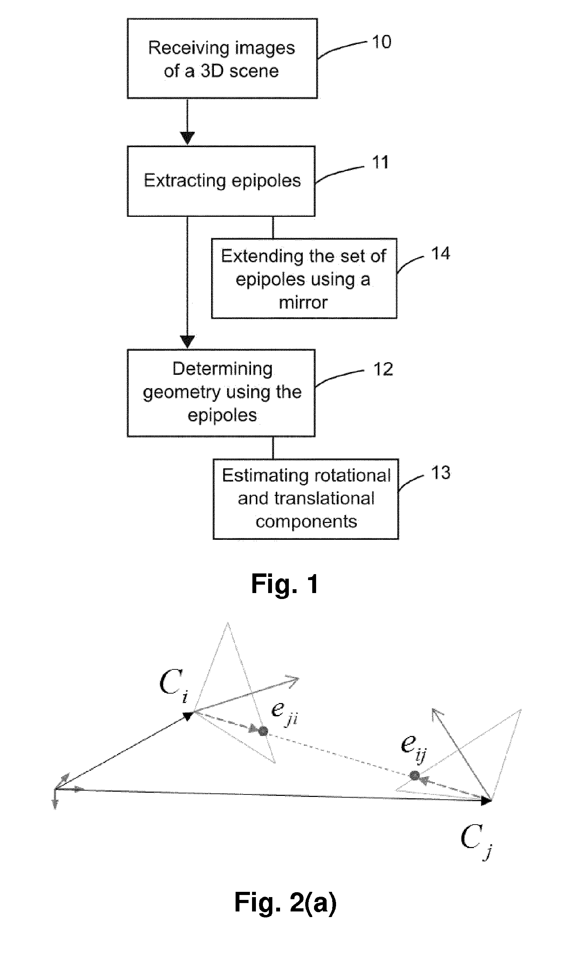

Fig. 1 schematically illustrates a preferred embodiment of a camera calibration method for a multi-camera system, which comprises: receiving 10 images of a 3D scene captured by a multi-camera system; extracting 11 epipoles from the received images; and determining 12 the geometry of the multi-camera system using the epipoles.

In particular, the proposed camera calibration method determines 12 the 3D geometry of a multi-camera system using the epipoles extracted 11 from images that are captured by the same system. In other words, the received images from the multi-camera system can provide at least a subset of epipoles visible in the corresponding images. Optionally, the epipoles can be extracted 11 from the received images using any available and feasible techniques known in the field.

Fig. 2(a) schematically illustrates an exemplary model of epipolar geometry for a stereo rig camera set, where $(C_i, C_j)$ are the 3D vectors representing the coordinates of the two camera centers, and $e_{ij}$ represents an i-th epipole extracted from a j-th camera view, namely the projection of an i-th camera center, $C_i$, in a j-th camera space. Given that the cameras are internally calibrated, each image point can be converted to a 3D unit-norm vector that represents the corresponding direction in the metric camera space. Accordingly, epipoles, which are also image points, can therefore also be represented as 3D unit-norm vectors, which represent points on unit sphere $S2$ or equivalently 3D directions in 3D space. Generally, the projection of a 3D vector on $S2$ can be explicitly expressed using the notation

$$\mathcal{N}\{v\} = \frac{v}{\sqrt{v^T v}}.$$

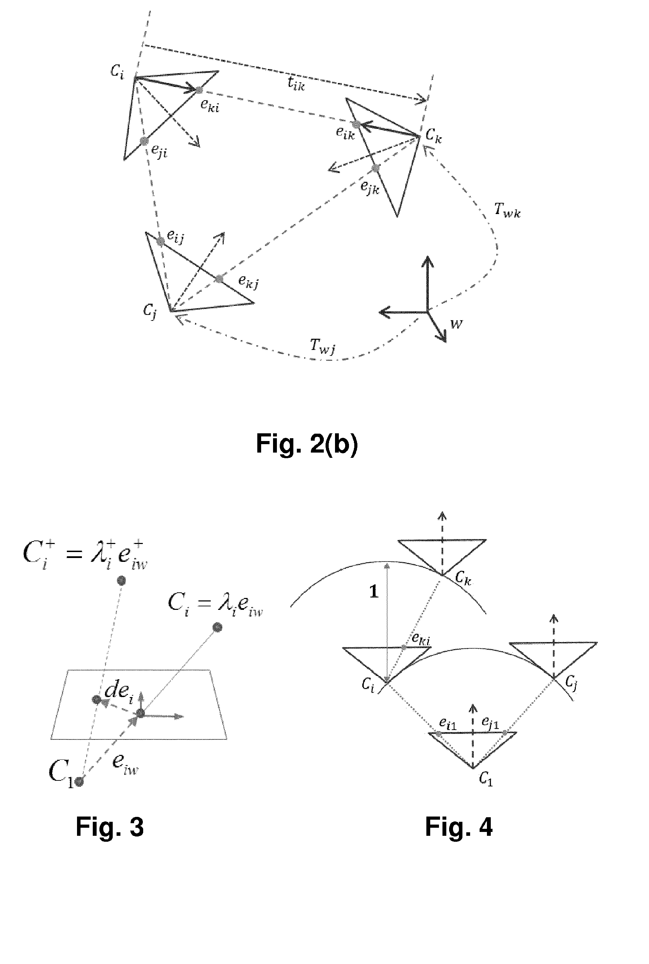

Similarly, Fig. 2(b) schematically illustrates an exemplary model of the epipolar geometry for a multi-camera system composed of three cameras.

The set of available (visible) epipoles in the received images can be denoted as

$$V = \left\{ (i,j) : \exists \tilde{e}_{ij} \right\},$$

where $\tilde{e}_{ij}$ represents the measurement of $e_{ij}$. The epipoles measurements in the set V can be further pairwise grouped into a set (M) of pairs of mutually visible epipoles

$$M = \left\{ (i,j) : \exists \tilde{e}_{ij} \wedge \exists \tilde{e}_{ji} \right\}.$$

Preferably, in the embodiments of the proposed method, the determination 12 of the geometry of the multi-camera system comprises estimating 13 a rotational component and a translational component of the pose of each camera of the multi-camera system. In particular, the task of estimating the transformation set $\{T_{wi}\}_{i=2,\ldots N}$ can be decoupled into two respective stages aim at estimation of rotational and translational components of camera poses, i.e. $\{R_{wi}\}_{i=2,\ldots,N}$ and $\{t_{wi}\}_{i=2,\ldots,N}$.

**Rotational component estimation**

Referring to the geometry model shown in Fig. 2, in a multi-camera system, the epipole projection $e_{ij}$, representing an i-th epipole extracted from a j-th camera view, can be denoted as:

$$e_{ij} \sim R_{wj}^T (C_i - C_j). \qquad (1)$$

Similarly, a corresponding epipole in an i-th camera view can be represented as:

$$e_{ji} \sim R_{wi}^T (C_j - C_i).$$

A combination of the above two equations together with the unit-norm constraint of the epipoles representation leads to:

$$e_{ji} + R_{wi}R_{wj}^T e_{ij} = 0. \tag{2}$$

This equation can also be derived by looking at the epipoles as unit-norm vectors, representation of two points on $S2$.

In equation (2), it can be seen that the translational component of the camera system geometry has disappeared, and the equation can thus be used for the independent estimation of the camera orientations.

For a multi-camera system composed of $N$ cameras, the rotational component of the pose of the cameras can be then estimated by solving the problem of

$$\left\{\hat{R}_{wi}\right\}_{i=2,\dots,N} = \operatorname{argmin}_{R_{wi} \in SO(3)} \left\{\sum_{(i,j) \in M} \left\|\rho_{i,j}\right\|^2\right\}, \tag{3}$$

where $\hat{R}_{wi}$ represents the estimation of $R_{wi}$, $\rho_{i,j}$ is error contribution denoted as

$$\rho_{i,j} = \tilde{e}_{ij} + R_{wj}R_{wi}^T \tilde{e}_{ji}, \tag{4}$$

and $M$ is the set of the pairs of epipoles as defined above.

In this preferred embodiment of the proposed camera calibration method, the problem of equation (3) is solved within an iterative minimization context using Levenberg-Marquardt (LM) algorithm.

First, the update of each camera rotation $R_{wj}$ can be parameterized with a 3D vector $dw_j$, which is used to compute the corresponding unit quaternion $dq_i$, and be represented in matrix form as

$$\begin{cases} R_{wj}^+ = R_{wj}dR = R_{wj}\left(I_{3\times3} + 2\left[dw_j\right]_\times\right) \\ dq_i = \left[\sqrt{(1 - dw_j^T dw_j)} \mid dw_j^T\right] \end{cases} \tag{5}$$

where $R_{wj}^+$ is the update of $R_{wj}$, and the cross product and inner product between 3D vectors are denoted as $v_a^T v_b$ and $[v_a]_\times v_b$, where $[v]\times$ is the skew symmetric matrix built using the vector $v$.

Using equation (5) in equation (4) for the update of both camera rotations $R_{wj}$ and $R_{wi}$, and neglecting the powers of $dw_j$ higher than one,

$$\rho_{i,j}^+ = \tilde{e}_{ij} + R_{wj}^+ R_{wi}^{+T} \tilde{e}_{ji} = \rho_{i,j}^+ + J_\rho dp \tag{6}$$

where

$$dp = [dw_2^T, \dots, dw_k^T, \dots, dw_N^T]^T$$

is the update vector collecting all the rotation update parameters stacked in a single vector. After a few mathematical manipulations, the Jacobian $J_\rho$ can be written in matrix form as

$$\begin{cases} J_\rho = [0 \dots, J_b, \dots 0 \dots, -J_b, \dots 0] \\ J_b = 2R_{wj}[R_{wi}^T \tilde{e}_{ji}]_\times \end{cases} \tag{7}.$$

The update equations (6) and (7) are then used within the LM iterations of optimization framework to navigate through the space $SO(3)^{N-1}$, i.e. the space of rotation counted $N$-1 times, searching for the solution of the problem of (3).

For a multi-camera system composed of $N$ cameras, the three degrees of freedom in the equation (2) will result in a problem of 3($N$ - 1) unknowns for the estimation of all camera orientations in the multi-camera system. In other words, provided a sufficient number, i.e. larger than 3($N$ - 1), of equations stacked in a linear system, the camera orientations can be estimated by solving the linear system in least square sense.

In such a multi-camera system composed of $N$ cameras, up to ($N^2$- $N$) independent equations can be recovered by stacking the equations together in equation (2). Indeed the geometry of $N$ cameras implies a number of ($N^2$ - $N$)/2 pairs of corresponding epipoles, each one contributing to the system of equations with the three equations embedded in (2). However, as the epipoles are unit-norm vectors and the rotation component of a camera pose is a norm-preserving transformation, only two of the three equations are independent equations. Therefore, a multi-camera system composed of $N$ cameras can provide an overall and maximum number of ($N^2$- $N$) independent equations, which might possibly be less if some pairs of the epipoles are not available, namely invisible, in the corresponding images.

In conclusion, for such a multi-camera system composed of $N$ cameras, as each camera pose has three degrees of freedom and each vector equation (2) provides only two independent linear equations, the number of visible epipoles preferably satisfies the condition

$$2|M| \geq 3(N - 1),$$

where |$M$| is the cardinality of the set M. In addition, as $N$ cameras define a maximum number of ($N^2$ - $N$)/2 pairs of mutually visible epipoles, a condition of $N \geq 3$ to meet the constraint is preferred.

**Translational component estimation**

Subsequent to the estimation of rotational components of the camera poses $\{R_{wi}\}_{i=2,...,N}$, the same is used as an additional input for further estimation of translational components of the multi-camera system geometry, i.e. $\{t_{wi}\}_{i=2,...,N}$.

Referring to equation (1), the epipole projection of an $i$-th camera center in a $j$-th camera space can be rewritten with an explicit definition of the scale factor:

$$e_{ij} = R_{wj} \cdot \mathcal{N}\{C_i - C_j\}. \qquad (8)$$

Similar to equation (2), the above equation (8) provides two independent equations in the six unknowns, given by the coordinates of the camera centers ($C_i, C_j$). Since the camera orientation $R_{wj}$ can now be assumed known, the equation (8) becomes a non-linear equation in the unknowns $C_i$ and $C_j$.

For a multi-camera system composed of $N$ cameras, as each visible epipole provides an equation in the form of equation (8), the translational component of the pose of the cameras can be estimated by solving the optimization problem of

$$\{\hat{C}_i\}_{i=2,...,N} = \operatorname{argmin}_{C_i \in \mathbb{R}^3} \left\{ \sum_{(i,j) \in V} \|\tau_{i,j}\|^2 \right\}, \qquad (9)$$

where $\hat{C}_i$ represents the estimation of $C_i$, $\tau_{i,j}$ is error contribution denoted as

$$\tau_{i,j} = \tilde{e}_{ij} - \hat{R}_{wj} \cdot \mathcal{N}\{C_i - C_j\}, \qquad (10)$$

and V is the set of available (visible) epipoles from the received images as defined above.

Similar to the above estimation of the rotational component of camera poses, the problem of equation (9) can be solved within an iterative minimization context using Levenberg-Marquardt (LM) algorithm.

For a comfortable formulation of the LM iterations, in order to keep a minimal dimensionality of the optimization space, the projection center of each camera of the multi-camera system can be defined and parameterized using the corresponding epipolar ray on the reference camera, e.g., a first camera,

$$C_i = \lambda_i e_{i1}. \qquad (11)$$

As schematically illustrated in Fig. 3, the projection centers are then adjusted by changing the point depth on the ray and moving the epipole on the orthogonal plane, which correspond to the parameters update

$$\begin{cases} \lambda_i^+ = \lambda_i(1 + \delta\lambda_i) \\ e_{i1}^+ = e_{i1} + B_i\delta e_i \end{cases} \qquad\qquad (12)$$

where $B_i$ is the 3x2 matrix representing any basis for the plane tangent to the unit sphere at the epipole $e_{i1}$, $\delta e_i$ is a 2D vector and $\delta\lambda_i$ is a scalar. This formulation maintains the 3D dimensionality of the update vector for each camera center and simultaneously agrees with the assumption $\delta\lambda_i\delta e_i\dot{=}0$. It should be noted that the definition of epipoles as unit-norm vectors leads to the update equation (12), which describes a local update of each epipole $e_{i1}$ on $S2$. The procedure to retrieve a basis for a given 3D plane is well known and can be found in any geometry books in the field, thus is omitted here.

Using equation (12) in equation (11) and after a few mathematical manipulation, neglecting the term in $(\delta\lambda_i, \delta e_i)$ with multiplicity higher than one, the update of the error term (10) can be rewritten as

$$\tau_{i,j}^+ = \tau_{i,j} + J_\tau dp,$$

where

$$dp = [\delta e_2^T, \delta\lambda_2, \ldots, \delta e_i^T, \delta\lambda_i, \ldots, \delta e_N^T, \delta\lambda_N]^T$$

is the update vector collecting the parameters of each camera centers stacked in a single vector.

Similar to equation (7), the Jacobian matrix $J_\tau$ can be expressed in a relatively compact matrix form, by applying the basic derivation rules for square root and quotient of functions,

$$\begin{cases} t_{ji} = C_i - C_j \\ J_\tau = \hat{R}_{wj}\dfrac{J_t\sqrt{t_{ji}^T t_{ji}} - t_{ji}\frac{t_{ji}^T J_t}{\sqrt{t_{ji}^T t_{ji}}}}{t_{ji}^T t_{ji}} \\ J_\tau = \begin{bmatrix} 0 & \ldots & -\lambda_j B_{e_j} & -\lambda_j e_{jw} & \ldots 0 \ldots & \lambda_i B_{e_i} & \lambda_i e_{iw} & \ldots 0 \end{bmatrix} \end{cases}.$$

The Jacobian $J_\tau$ is then used within the LM iterations of optimization framework searching for the solution of the problem (9).

Similar to equation (2) and the above derivation, equation (8) provides two independent linear equations in the unknowns $C_i$ and $C_j$, and consequently the number of visible epipoles preferably satisfies the condition

$$2|V| \geq 3(N - 1),$$

where $|V|$ is the cardinality of the set $V$. Since $V$ is always greater than $M$, it can be concluded that the set of visible epipoles can always provide enough constraints for the estimation of the translational components when the condition of $M$ is satisfied.

In one embodiment, the estimation of the camera centers can also be achieved using a smarter initialization of the LM iteration, as shown in Fig. 4. The reference camera is naturally located in the origin and all the cameras are located on one epipolar ray corresponding to one visible epipole. For example, given that $\tilde{e}_{ij} \in V$ and $C_i$ is located on the ray identified by $\tilde{e}_{ij}$ at unit distance from the $C_j$, i.e. $C_i = 1 \cdot \tilde{e}_{ij}$, the camera center can be converted in the reference frame of the reference camera and the corresponding pose can be estimated according to (11). As multiple epipoles $\tilde{e}_{ij}$ for a single view i may be available, one is randomly selected for the pose initialization.

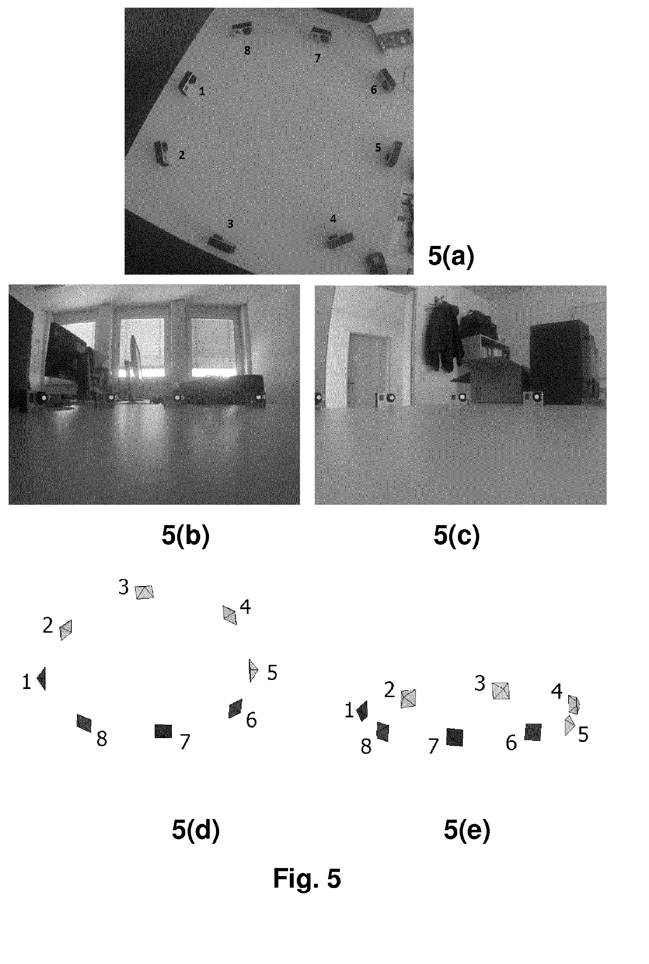

Fig. 5 shows some exemplary results obtained from an exemplary embodiment of the proposed calibration method. As shown in Fig. 5(a), a set of synchronized GOPRO cameras are arranged on a desk in a quasi-circular configuration as a multi-camera system. Images are captured simultaneously by the cameras.

In this embodiment, the extraction 11 of the epipoles from the images is performed by a manual selection of reference points by an operator. For convenience and simplicity, the lens centers of the cameras are selected as the reference points for epipoles. Figs. 5(b) and (c) show two image examples out from a total of eight images, where the white dots are the selected points.

The selected epipoles are then processed using the above described estimation 13, and the geometry of the multi-camera system is determined 12 accordingly. The reconstructed geometry of the multi-camera system is shown in Figs. 5(d) and (e), where the circular configuration of the system is clearly and correctly illustrated as the estimation result.

It can be seen that the proposed camera calibration method for a multi-camera system is effective and can be potentially integrated in a more structured calibration architecture.

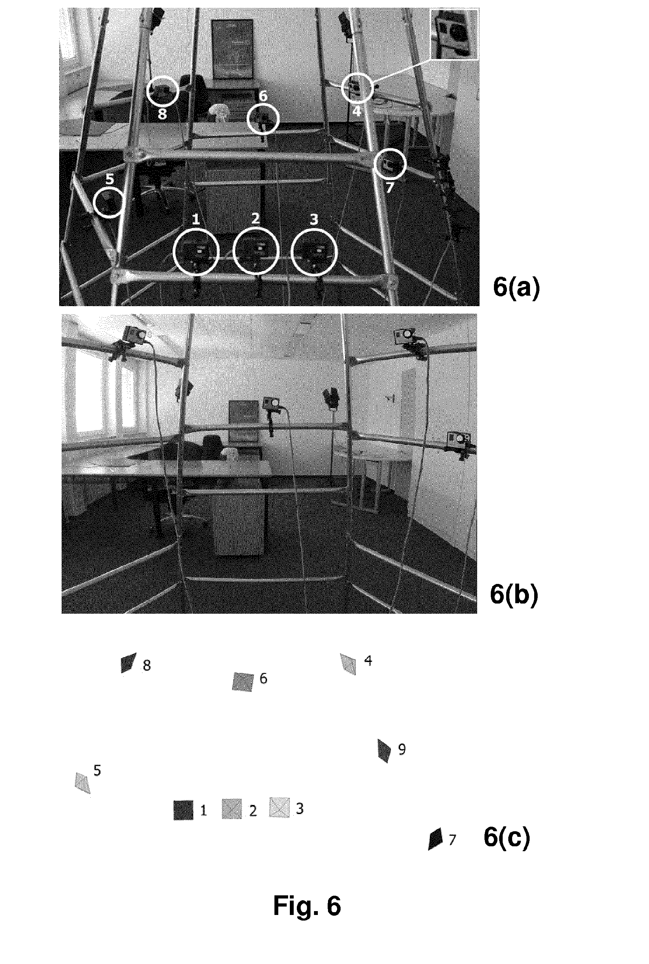

Fig. 6 shows the results obtained from another exemplary embodiment of the proposed calibration method. As shown in Fig. 6(a), the set of multi-camera system is composed of nine cameras of GOPRO HERO 3, set to 5MP resolution and medium FoV, roughly 120° horizontal field of view. The cameras are preferably calibrated, and are placed on a dome frame in a quasi-circular configuration in such a way that cameras 1, 2 and 3 are located on the same straight frame bar. Similar to the above embodiment, the visible epiopoles are manually selected in the images captured by the multi-camera system. One example image is as shown in Fig. 6(b). The estimation result of the system geometry is shown in Fig. 6(c).

## Evaluation

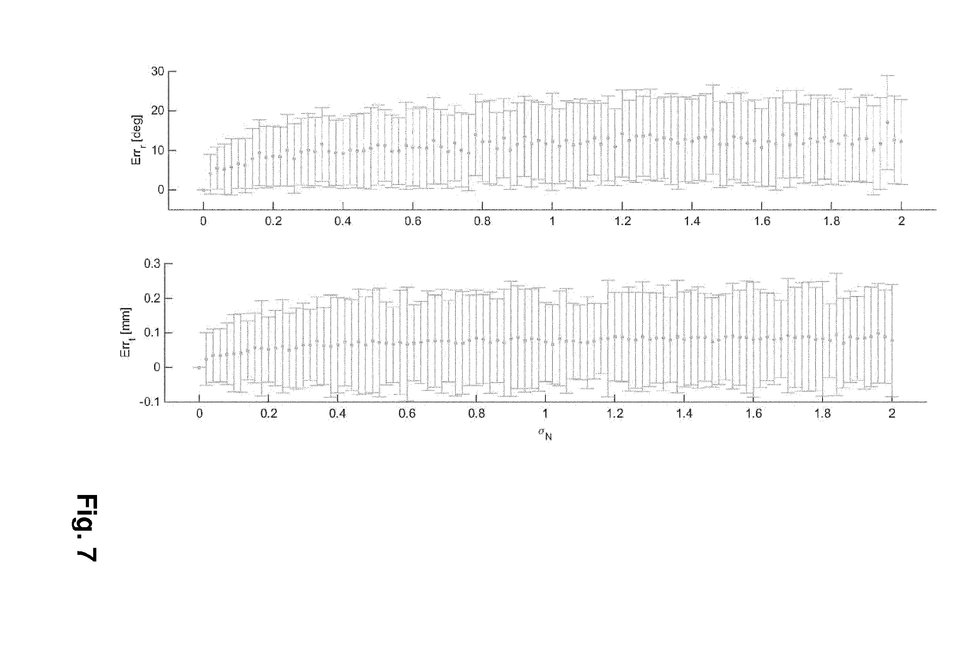

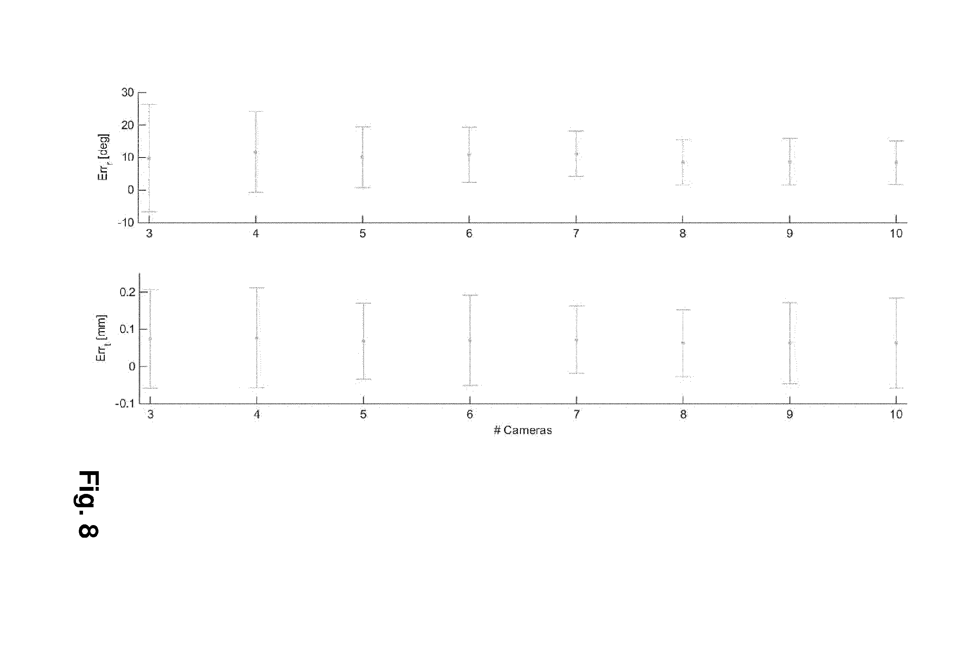

Referring to Figs. 7 and 8, the proposed camera calibration method is applied on simulated data, in order to further measure and evaluate the effectiveness of the method.

A multi-camera system is assumed to comprise several cameras, each randomly located on a unit sphere and oriented towards the origin of the same. Each of the cameras is modelled as super wide-angle lens (170° horizontal field of view) and a 1024×768 pixel sensor. The visible epipoles in each image captured by the multi-camera system are corrupted using a zero-mean white Gaussian noise. The assumed multi-camera system is then calibrated using the proposed calibration method. That is, the geometry of the multi-camera system is determined 12 using the proposed method, where the LM iterations are initialized by simply locating each camera in the origin with orientation given by the identity matrix.

For a first test, the number of the cameras in the multi-camera system is assumed and kept fixed, for example as five, and the image noise intensity is progressively increased by ranging its standard deviation within the range of [0; 2] pixels. For each noise intensity level, a new model is generated for a hundred times and the corresponding vectors of estimation error for all the camera poses are collected. The median and standard deviation are calculated as the final error measurement.

The error of the rotational and translational component of the camera matrices are defined as

$$\begin{cases} \epsilon_{R^i} = \left\| \Phi(R_{wi}\hat{R}_{wi}^T) \right\| \\ \epsilon_{t^i} = \left\| t_{wi} - \hat{t}_{wi} \right\| \end{cases},$$

where $\Phi(R)$ is the conversion of a rotation matrix in axis-angle representation. The translational error, $\varepsilon_t i$, is given by the distance between the actual camera centers and the estimated ones; and the rotational error, $\varepsilon_R i$, is given by the norm of vector and represents the offset rotation between the actual camera orientation and the estimated orientation in axis-angle notation.

Fig. 7 shows the estimated errors, which are averaged for each trial across all of the views. The translational error is shown as the upper diagram, while the rotational error is shown as the lower diagram.

In a second test, the image noise intensity is kept fixed, for example at an intensity of 1 pixel, and the number of cameras is progressively increased within an interval, e.g. [3; 20] cameras. A same test methodology is used for this nose test, and the results are shown in Fig. 8, where the upper and the lower diagrams illustrate the data of translational and rotational errors respectively. It can be observed that a decreasing estimation error with larger number of cameras of the multi-camera system is as the consequence of the increase of over-constrain in the minimization problem.

## Exemplary embodiment using a mirror

In one embodiment, the application of the proposed camera calibration method is extended. In particular, the step of extracting 11 epipoles from the received images further includes extending 14 the set of epipoles using a mirror.

This embodiment refers to the case when the number of available, namely visible, epipoles in the received images is not large enough to provide sufficient constraints for solving the estimation problems of equations (3) and (9). A practical solution is to extend the set of epipoles by means of a planar mirror, which correspondingly requires the extension of the objective measure in equations (3) and (9) with additional terms related to the mirrored epipoles.

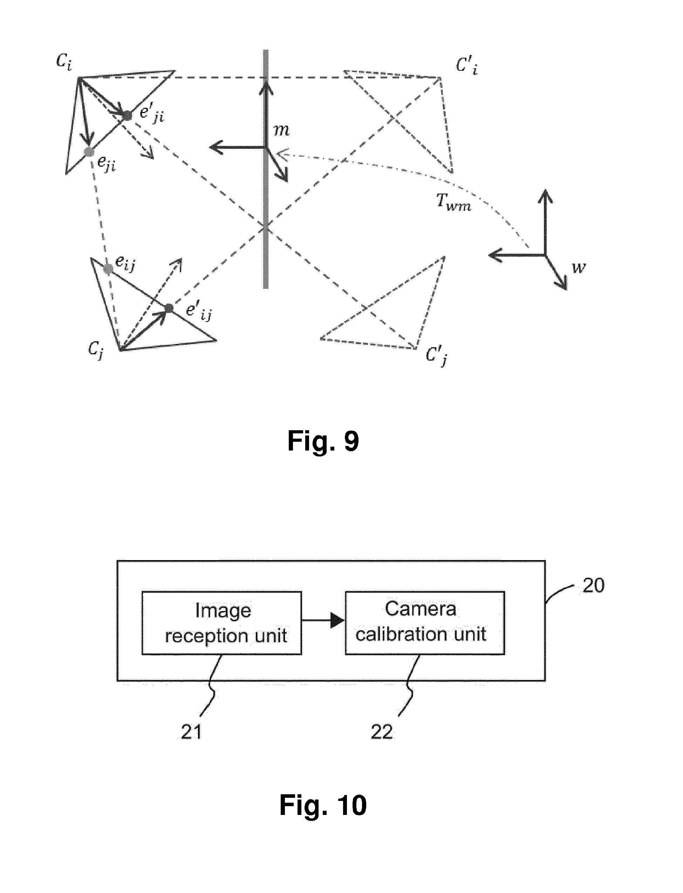

Fig. 9 schematically illustrates an exemplary model for the embodiment, where two cameras can see each other through a planar mirror. The mirrored epipoles $e'_{ij}$ and $e'_{ji}$ are recorded through the mirror reflection, corresponding to the virtual cameras located at $C'_j$ and $C'_i$. A reference system $m$ can be defined with the $X$ and $Y$ axes aligned on the mirror surface and with the Euclidean transformations,

$$T_{wm} = \{R_{wm},\ t_{mw}\} \dots,$$

relating the absolute reference system to the mirror system.

According to the fundamental laws of the reflection geometry, a vector $X$ and its mirrored version $X'$ are related in the mirror reference system $m$ by the equation $X = F_z X'$, where $F_z$ = diag([1 1 -1]) is the $3 \times 3$ reflection matrix representing the reflection about the $Z$-axis induced by the mirror, i.e by the plane $XY$. The mirrored epipoles $e'_{ij}$ therefore can be accounted as the image of a virtual camera located in $C'_i$, where

$$C'_i = T_{wm}^{-1} \circ \left(F_z \cdot (T_{wm} \circ C_i)\right).$$

Similar to the above detailed description, the rotational component of the camera pose is estimated first, followed by the estimation of the translational component of the camera pose. Referring to equations (1) and (2), taking into account the fact that the mirrored epipoles are expressed as unit-norm vectors in their own camera frames, the mirrored epipoles can be derived as:

$$e'_{ij} = -R_{mj}F_z R_{mi}^T e'_{ji} = -R_{wj}R_{wm}^T F_z R_{wm} R_{wi}^T e'_{ji}.$$

This equation can be further expanded by decomposing the rotation matrix $R_{wm}$ with the Euler ZYX parameterization, $R_{wm} = Z_{wm}Y_{wm}X_{wm}$, and using the equivalence $Z_{wm}^T F_z Z_{wm} = F_z$, :

$$e'_{ij} = -R_{wj}X_{wm}^T Y_{wm}^T F_z Y_{wm} X_{wm} R_{wi}^T e'_{ji}. \tag{13}$$

Therefore, each pair of the mutually visible mirrored epipoles provides an additional equation in the form of equation (13), which can be incorporated in the optimization problem of equation (3):

$$\{R_{wi}, X_{wm}, Y_{wm}\}_{\substack{i=1,..,N \\ m=1,...,M}} = \underset{\substack{R_{wi}\in SO(3) \\ X_{wm}\in SO_X(3) \\ Y_{wm}\in SO_Y(3)}}{\operatorname{argmin}} \{E_\rho\} \tag{14}$$

where $SO_X(3)$ and $SO_Y(3)$ are the subspace of 3D rotations about the $X$ axis and $Y$ axes, and the objective function E is defined as

$$E_\rho = \sum_{(i,j)\in M} \left\|\rho_{i,j}\right\|^2 + \sum_{(i,j)\in M'} \left\|\rho'_{i,j}\right\|^2$$

where

$$\rho'_{i,j} = e'_{ij} + R_{wj}X_{wm}^T Y_{wm}^T F_z Y_{wm} X_{wm} R_{wi}^T e'_{ji}. \tag{15}$$

In equation (15), the error term $\rho_{i,j}$ is defined according to equation (4) described above, M' is the set of pairs of mirrored mutually visible epipoles, and M is the number of mirror snap shots, which is the number of different mirror poses.

The equation (14) provides the lowest possible dimensionality of optimization problem as each mirror pose increase the number of parameter by two, i.e. the additional parameters of rotations $X_{wm}$ and $Y_{wm}$. Similar to the above description, the problem of equation (14) can be solved by means of an LM algorithm, by initializing the additional parameters of the mirror pose to zero, and the Jacobian of the overall objective function can be analytically calculated following the same procedure used to derive equation (7). The details of this calculation are omitted here for simplicity and clarity of the description. Subsequent to the estimation of rotational components of the camera poses and the mirror poses, the estimation of translational components of the same can be performed similarly by extending the objective function (9) with the contributions provided by the mirrored epipoles. In addition, taking advantage of the knowledge of the rotational components of the camera and mirror poses (14), the complexity of the translational component estimation can be significantly reduced.

The mirror pose component can be firstly expanded as

$$R_{wm}^T = [r1_{wm}, r2_{wm}, r3_{wm}]$$

$$t_{wm} = [tx_{wm}, ty_{wm}, tz_{wm}],$$

and the projection centers of the mirrored and the real cameras can be described as:

$$C_i' = F_m C_i + tz_{wm} r3_{wm} \qquad (16)$$

where $F_m = X_{wm}^T Y_{wm}^T F_z Y_{wm} X_{wm}$.

Equation (16) allows for the representation of the mirrored epipoles as a function of only the real camera poses and the mirror poses:

$$e_{ij}' = R_{wj} \mathcal{N} \{ F_m C_i + tz_{wm} r3_{wm} - C_j \}. \qquad (17)$$

Once again it can be concluded that each visible mirrored epipole provides an additional equation in form of (17), which can be incorporated in the optimization problem of (9). Accordingly, the equation (9) can be reformulated, by extending the optimization space and including the additional error terms:

$$\left\{ \begin{matrix} C_i, \\ tz_{wm} \end{matrix} \right\}_{\substack{i=1,..,N \\ m=1,...,M}} = \underset{\substack{C_i \in \mathbb{R}^3 \\ tz_{wm} \in \mathbb{R}}}{\operatorname{argmin}} \{ E_\tau \} \qquad (18)$$

and

$$E_\tau = \sum_{(i,j) \in V} \left\| \tau_{i,j} \right\|^2 + \sum_{(i,j) \in V'} \left\| \tau_{i,j}' \right\|^2$$

where

$$\tau_{i,j}' = e_{ij}' - R_{wj} \mathcal{N} \{ F_m C_i + tz_{wm} r3_{wm} - C_j \}. \qquad (19)$$

In (19), $\tau_{i,j}$ is defined according to equation (10) and V' is the set of pairs of mirrored visible epipoles. Similarly, the formulation (18) provides the lowest possible dimensionality of the optimization problem as each mirror pose increases

# EP 3 086 285 A1

the number of parameters only by one, namely the additional parameter $tz_{wm}$. The solution can be obtained by means of the LM algorithm, by initializing the additional parameter of the mirrored pose to zero, and the Jacobian of the objective function can be analytically calculated following the same procedure used to derive equation (14). The details of the calculation are omitted here for simplicity and clarity of the description.

Fig. 10 schematically depicts an apparatus 20 configured to perform the proposed camera calibration method for a multi-camera system. The apparatus 20 comprises an image reception unit 21 and a camera calibration unit 22. The image reception unit 21 is configured to receive 10 images of a 3D scene captured by a multi-camera system. The camera calibration unit 22 is configured to extract 11 epipoles from the received images and to determine 12 the geometry of the multi-camera system using the epipoles. In particular, the camera calibration unit 22 is configured to estimate 13 rotational and translational components of the pose of each camera of the multi-camera system.

## REFERENCES

[I] Joaquim Salvi, Xavier Armangué and Joan Batlle, "A comparative review of camera calibrating methods with accuracy evaluation", Pattern Recognition, 35(7), pp. 1617-1635, July 2002.

[II] Schiller, I.: MIP - MultiCameraCalibration. Retrieved April 20, 2015, from http://www.mip.informatik.uni-kiel.de/tiki-index.php?page=Calibration

[III] Tomas Svoboda, Daniel Martinec and Tomas Pajdla, "A convenient multi-camera self-calibration for virtual environments", PRESENCE: Teleoperators and Virtual Environments, 14(4), pp. 407-422, August 2005.

## Claims

1. A method of camera calibration for a multi-camera system, comprising:

   - receiving (10) images of a 3D scene captured by the multi-camera system;
   - extracting (11) epipoles from the received images; and
   - determining (12) a geometry of the multi-camera system using the epipoles.

2. The method of claim 1, wherein determining (12) the geometry of the multi-camera system comprises estimating (13) a rotational component and a translational component of a pose of each camera of the multi-camera system.

3. The method of claim 2, wherein estimating (13) the rotational component of the camera pose includes solving the problem of

$$\left\{\hat{R}_{wi}\right\}_{i=2,...,N} = \operatorname*{argmin}_{R_{wi} \in SO(3)} \left\{ \sum_{(i,j) \in M} \|\rho_{i,j}\|^2 \right\}$$

within an iterative minimization context using Levenberg-Marquardt algorithm, where $R_{wi}$ is the rotational component of camera pose, $\hat{R}_{wi}$ represents the estimation of $R_{wi}$, $SO(3)$ is a group of 3D rotation matrices, $N$ is the number of the cameras in the multi-camera system, $M$ denotes a set of pairs of available epipoles, and $\rho_{i,j}$ is an error contribution denoted as

$$\rho_{i,j} = \tilde{e}_{ij} + R_{wj} R_{wi}^T \tilde{e}_{ji},$$

where $\tilde{e}_{ij}$ represents the measurement of $e_{ij}$ which is an epipole as the projection of an $i$-th camera center in a $j$-th camera space.

4. The method of claim 2 or 3, wherein estimating (13) the translational component of the camera pose includes solving the problem of

$$\{\hat{C}_i\}_{i=2,\ldots,N} = \underset{C_i \in \mathbb{R}^3}{\mathrm{argmin}}\left\{\sum_V \|\tau_{i,j}\|^2\right\}$$

within an iterative minimization context using Levenberg-Marquardt algorithm, where $\hat{C}_i$ represents the estimation of $C_i$ which is the coordinate of the center of an $i$-th camera, $N$ is the number of the cameras in the multi-camera system, V denotes a set of available epipoles, and $\tau_{i,j}$ is an error contribution denoted as

$$\tau_{i,j} = \tilde{e}_{ij} - \hat{R}_{wj} \cdot \mathcal{N}\{C_i - C_j\},$$

where $\tilde{e}_{ij}$ represents the measurement of $e_{ij}$ which is an epipole as the projection of an $i$-th camera center in a $j$-th camera space, $(C_i, C_j)$ are the coordinates of the camera centers, and $\mathcal{N}\{v\}$ is the normalization of a vector $v$ as an unit-norm vector and can be denoted as

$$\mathcal{N}\{v\} = \frac{v}{\sqrt{v^T v}}.$$

5. The method of any one of the preceding claims, wherein extracting (11) epipoles from the received images includes manually selecting reference points in the images.

6. The method of any one of the preceding claims, wherein extracting (11) epipoles from the received images includes extending 14 the set of epipoles using a mirror.

7. A camera calibration apparatus (20), comprising:

   - an image reception unit (21) configured to receive (10) images of a 3D scene captured by a multi-camera system; and
   - a camera calibration unit (22) configured to extract (11) epipoles from the received images and to determine (12) a geometry of the multi-camera system using the epipoles.

8. The apparatus of claim 6, wherein the camera calibration unit (22) is configured to estimate (13) a rotational component and a translational component of a pose of each camera of the multi-camera system.

9. A computer readable storage medium having stored therein instructions for camera calibration for a multi-camera system, which when executed by a computer, cause the computer to:

   - receive images of a 3D scene captured by the multi-camera system;
   - extract epipoles from the received images; and
   - determine a geometry of the multi-camera system using the epipoles.

**Fig. 1**

**Fig. 2(a)**

**Fig. 2(b)**

**Fig. 3**

**Fig. 4**

5(a)

5(b)                          5(c)

5(d)                          5(e)

Fig. 5

6(a)

6(b)

6(c)

Fig. 6

Fig. 7

Fig. 8

**Fig. 9**

**Fig. 10**

Europäisches
Patentamt

European
Patent Office

Office européen
des brevets

# EUROPEAN SEARCH REPORT

**Application Number**

EP 15 30 5609

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | PO-HAO HUANG ET AL: "Contour-Based Structure from Reflection", CONFERENCE ON COMPUTER VISION AND PATTERN RECOGNITION, 2006 IEEE COMPUTER SOCIETY , NEW YORK, NY, USA 17-22 JUNE 2006, IEEE, PISCATAWAY, NJ, USA, vol. 1, 17 June 2006 (2006-06-17), pages 379-386, XP010922844, DOI: 10.1109/CVPR.2006.88 ISBN: 978-0-7695-2597-6 | 1,2,5-9 | INV. G06T7/00 |
| A | * abstract * * sections "1. Introduction", "3.3. Co-linear Epipoles" * * page 381, right-hand column, line 33 - page 382, left-hand column, line 22 * | 3,4 | |
| X | MARIOTTINI G L ET AL: "Planar Catadioptric Stereo: Single and multi-view geometry for calibration and localization", 2009 IEEE INTERNATIONAL CONFERENCE ON ROBOTICS AND AUTOMATION : (ICRA) ; KOBE, JAPAN, 12 - 17 MAY 2009, IEEE, PISCATAWAY, NJ, USA, 12 May 2009 (2009-05-12), pages 1510-1515, XP031509843, ISBN: 978-1-4244-2788-8 | 1,2,6-9 | |
| A | * abstract * * sections "III. Single and multi-view geometry for PCS", "IV. Algorithms for mirror calibration and image-based camera localization", "V.A. Simulations" * | 3,4 | **TECHNICAL FIELDS SEARCHED (IPC)**<br><br>G06T |

-----

-/--

The present search report has been drawn up for all claims

| Place of search | Date of completion of the search | Examiner |
|---|---|---|
| Munich | 30 October 2015 | Eckert, Lars |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 15 30 5609

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | XIANGHUA YING ET AL: "Self-Calibration of Catadioptric Camera with Two Planar Mirrors from Silhouettes", IEEE TRANSACTIONS ON PATTERN ANALYSIS AND MACHINE INTELLIGENCE, IEEE COMPUTER SOCIETY, USA, vol. 35, no. 5, 1 May 2013 (2013-05-01), pages 1206-1220, XP011497454, ISSN: 0162-8828, DOI: 10.1109/TPAMI.2012.195 | 1,2,6-9 | |
| A | * abstract * <br> * page 1207, right-hand column, lines 12-43 * <br> * sections "3 Epipolar Geometry", "4 Camera Calibration" * <br> * page 1218, right-hand column, lines 4-6 * | 3,4 | |

----- 

| | | | TECHNICAL FIELDS SEARCHED (IPC) |
|---|---|---|---|

The present search report has been drawn up for all claims

| Place of search | Date of completion of the search | Examiner |
|---|---|---|
| Munich | 30 October 2015 | Eckert, Lars |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **JOAQUIM SALVI ; XAVIER ARMANGUÉ ; JOAN BATLLE.** A comparative review of camera calibrating methods with accuracy evaluation. *Pattern Recognition,* July 2002, vol. 35 (7), 1617-1635
- **SCHILLER, I.** *MIP - MultiCameraCalibration,* 20 April 2015, http://www.mip.informatik.uni-kiel.de/tiki-index.php?page=Calibration

- **TOMAS SVOBODA ; DANIEL MARTINEC ; TOMAS PAJDLA.** A convenient multi-camera self-calibration for virtual environments. *PRESENCE: Teleoperators and Virtual Environments,* August 2005, vol. 14 (4), 407-422